Europäisches Patentamt

European Patent Office

Office européen des brevets

(19)

(11) Publication number: **0 051 887**
**A1**

(12) # EUROPEAN PATENT APPLICATION

(21) Application number: **81201171.6**

(22) Date of filing: **22.10.81**

(51) Int. Cl.³: **C 11 B 1/00, B 01 D 1/26**

(30) Priority: **07.11.80 NL 8006111**

(43) Date of publication of application: **19.05.82**
**Bulletin 82/20**

(84) Designated Contracting States: **AT BE CH DE FR GB IT LI LU NL SE**

(71) Applicant: **STORK DUKE B.V., 7 Wijkermeerweg, NL-1951 AH Velsen (N) (NL)**

(72) Inventor: **Jansen, Hendrik, 12 Hanegevecht, NL-2811 AD Reeuwijk (NL)**

(74) Representative: **Mathol, Heimen et al, Exterpatent 4, Willem Witsenplein, NL-2596 BK The Hague (NL)**

(54) **An installation for processing offal.**

(57) An installation for processing offal comprises one or more pipe evaporators (6, 14) each having vapour separators (8, 16) and condensate ducts, steam and vapour ducts, product ducts and product conveying pumps. To the rough preprocessed product fat has been added in a certain ratio. The pipe evaporators (6, 14) are connected in series with one another and are in turn connected in series to a continuous boiling vessel (22) for the final treatment of the product, thus forming a multistage installation.

## An installation for processing offal.

The invention relates to an installation for processing offal, comprising one or more evaporators each having vapour separators and condensate ducts, further comprising steam and vapour ducts, product ducts and product conveying pumps, said elements being arranged in such a manner that the incoming preprocessed rough product, to which in a certain ratio clean fat has been added, is during a given time, subjected to an increased temperature in order to withdraw water and to melt the fat. More particularly, the installation according to the invention is designed for continuously boiling offal, in which the incoming preprocessed rough product, to which in a certain ratio, clean fat has been added, is subjected to an increased temperature during a given time in order to withdraw water and to melt the fat.

In a known method pipe evaporators of the so-called "falling" principle are used, while the use of "rising" pipe evaporators is known from Netherlands Patent Application No. 80,01954, which discloses the principle of feeding the product into the bottom portion of the pipes, the product rising within the pipes as a result of thermosyphonic action. Furthermore a method is known wherein a continuous boiling vessel is used, as described in German Patent Specification No. 16 17 003.

Both installations having pipe evaporators and those having a boiling vessel, present their individual specific advantages and disadvantages. Pipe evaporators, for example, have a simple construction and do not contain moving parts, but the temperature in the first evaporating stage is limited to approx. $120^{\circ}C$, because otherwise a decolouring and/or foaming of the fat will occur.

In a boiling vessel a temperature of $135 - 140^{\circ}C$ is possible without the risk of decolouration of the fat, but said boiling vessel has a rather complicated construction, both due to fact that it contains rotating parts with sealing and bearing means, because of the internal steam heating of the stirring means and of the enveloping heating casing of the vessel.

Because of the smaller temperature range available, a relatively greater heating surface will be required in case of pipe evaporators being used. As a result of the relatively small volume of the pipe evaporators, the residence time of product is relatively short at a given processing capacity; due to the larger volume of the boiling vessel; the residence time therein is, however, relatively long at the same processing capacity. When using a boiling vessel, the process can therefore be technically controlled more easily than in the case of pipe evaporators.

- 3 -

It is a primary object of the present invention to obtain a considerable increase in the capacity of the installation without a proportional increase in the required energy consumption. This object is attained according to the invention in that the installation consists of a combination of one or more stages of pipe evaporators with their concerning vapour separators and of a continuous boiling vessel having its own vapour separator.

The basic idea underlying the invention is that, by adding one or more stages of pipe evaporators to already existing installations only comprising a boiling vessel, the processing capacity can be increased by a factor of 2 - 3 while maintaining the original steam consumption and without there being the need for radical structural changes. For new installations to be built, the combination of pipe evaporators with a boiling vessel improves the possibility of adapting the design to the structural requirements in the best possible manner.

Both the aforementioned kinds of pipe evaporators can be used in combination with a boiling vessel.

The invention will be illustrated with reference to the drawing showing an installation for continuously processing offal.

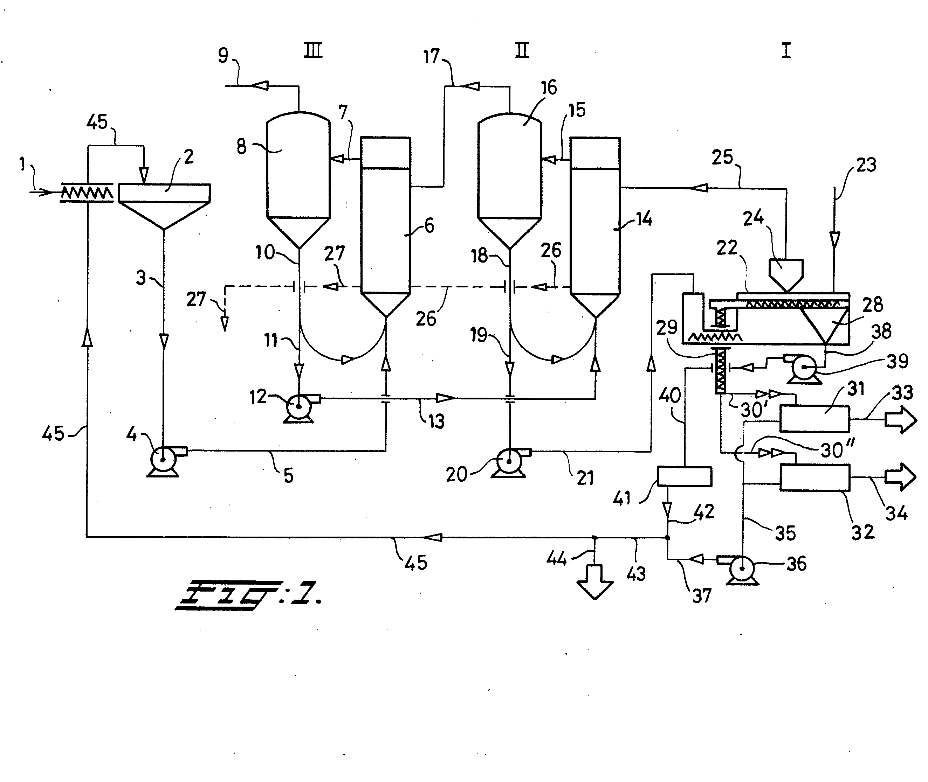

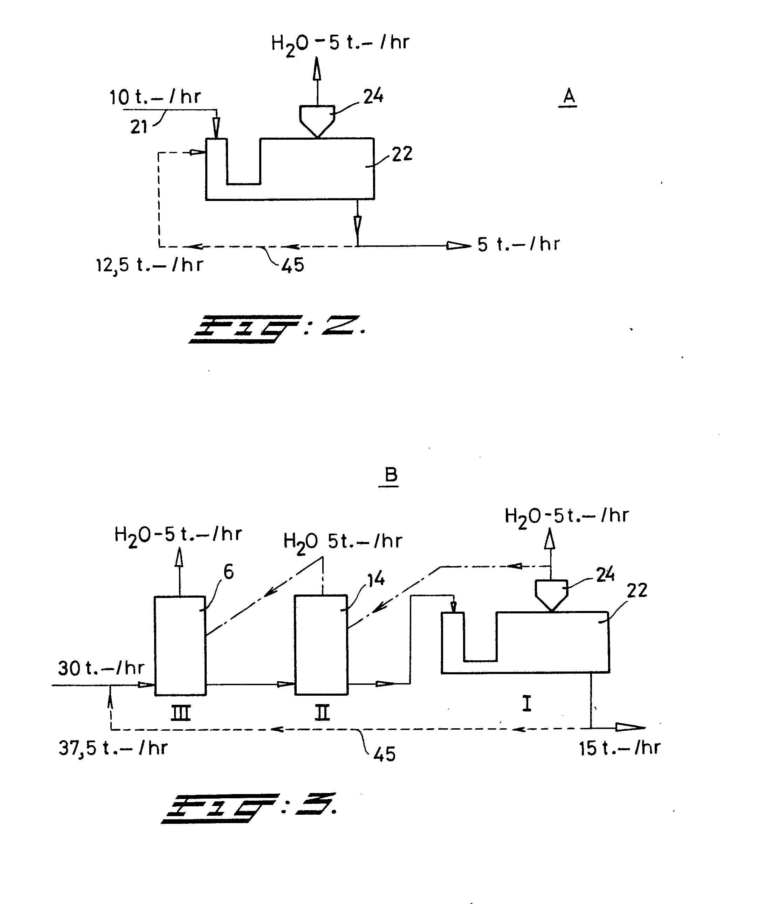

Figure 1 diagrammatically shows a three-stage installation; Figures 2 and 3 show two corresponding operating situations.

The installation as shown consists of three stages I, II and III, stage I being formed by a continuous boiling vessel and stages II and III by rising pipe evaporators of the type as described in Netherlands Patent Application No. 80,01954.

As seen in the processing direction, the installation comprises successively a feed duct 1 for the rough, cut-up product from which foreign metal bodies have been removed, said duct running towards a mixing vessel 2. Through duct 3, a conveyor pump 4 and a duct 5, the rough product is fed into the bottom portion of a pipe evaporator 6 of stage III which is heated by means of vapour emanating from stage II, via a duct 17.

The product passes through the pipe evaporator 6 in an upward direction and subsequently flows, via a duct 7, to a vapour separator 8 from which the released vapour is discharged via a duct 9 running towards a condenser (not shown). After having passed the vapour separator 8, the product is conveyed again towards the bottom portion of the pipe evaporator 6 via a duct 10, the circulation being maintained due to the thermosyphonic action in the pipes. Product is taken out of the circulating flow of stage III via a duct 11 and a metering pump 12, and is, via a duct 13, conveyed into the bottom portion of a pipe evaporator 14 of stage II; at this location the process occurs identical to that of stage III, however, at an increased temperature.

The pipe evaporator 14 is heated by high-temperature vapour emanated from the product present in a boiling vessel 22, via a vapour separator 24 and a duct 25. The vapour being medium-high in temperature, released from the product in stage II, is recirculated, via a duct 17, to stage III in order to heat the product in the pipe evaporator 6.

In a way identical to that of stage III, product is discharged from the circulating flow of stage II via a duct 19 and a metering pump 20, and recirculated to stage I via a duct 21. The latter stage is formed by a continuous boiling vessel 22, where fresh heating steam is fed to the casing (not shown) and to the stirring means through a steam feed duct 23. The course of the condensate formed from said steam after releasing the condensation heat has not been described.

The vapour of high-temperature released from the product in the boiling vessel 22 is conveyed towards the pipe evaporator 14 of stage II via a vapour separator 24 and a duct 25. In the drawing (fig. 1), the condensate formed in the latter stage is, via a duct 26 fed to the pipe evaporator 6 of stage I for heating purposes, the condensate formed in said pipe evaporator 6 being discharged via a duct 27.

In the shown embodiment of the invention the product slowly flows from the left to the right in a bath of fat in vessel 22, wherein a scooping means 28 is provided. By said means, the product is continuously separated, while the formed meal saturated with fat is conveyed, via a screw conveyor 29 and ducts 30' and 30", to presses 31 and 32, respectively. The pressed out meal is discharged from said presses via ducts 33 and 34, respectively, while the fat released is discharged through a duct 37 via a combined duct 35 and a pump 36.

The scooping means 28 of vessel 22 is connected to a duct 38, a pump 39 and a duct 40 in order to convey fat from the vessel 22 to a centrifuge 41 for purification purposes. After purification the fat runs via a duct 42 to a collecting duct 43, to which duct 37 is connected. The quantity of fat entering duct 43 is partially discharged via a duct 44, while the remainder, via a duct 45, is recirculated to the mixing vessel 2, so as to be used as admixture fat.

Hereafter, a comparison is made between two processing situations. Situation A, in which only $^{\alpha}$continuous boiling vessel is used and by which a determined processing capacity can be attained on the one hand, and situation B which results from situation A when a two-stage pipe evaporator installation 6, 14 is connected in series to the boiling vessel 22.

Situation A:

rough product - 10 tons/hr, consisting of $H_2O$ - 5,0 tons/hr

fat - 2,5 tons/hr

meal - 2,5 tons/hr

end product - 5 tons/hr, consisting of fat - 2,5 tons/hr

meal - 2,5 tons/hr

quantity of fat circulating through duct 45 = 12,5 tons/hr

Situation B:

rough product - 30 tons/hr, consisting of $H_2O$ - 15 tons/hr

fat - 7,5 tons/hr

meal - 7,5 tons/hr

end product - 15 tons/hr, consisting of fat - 7,5 tons/hr

meal - 7,5 tons/hr

quantity of fat circulating through duct 45 = 37,5 tons/hr

The three stages I, II and III each withdraw equal amounts of water from the product, i.e. about 5 tons/hr of $H_2O$ is withdrawn from the product in each stage.

- The vapour being medium-high in temperature formed in stage II is used for the withdrawal of water in stage III.

- The vapour of high temperature formed in stage I is used for withdrawing water in stage II.
- For the remaining withdrawal of water in stage I in both situations fresh steam is used.

Consequently, in situation A and B the respective quantities of fresh steam for withdrawing the same quantity of $H_2O$ per hour from the product in the boiling vessel 22 will differ slightly. The condition in vessel 22 may be summarized for both situations A and B as follows:

|  | BOILING VESSEL IN A | BOILING VESSEL IN |
|---|---|---|
| Incoming product in boiling vessel | 10 tons/hr | 20 tons/hr |
| Water evaporated | .$H_2O$ 5 tons/hr | .$H_2O$ 5 tons/hr |
| Output | .fat 2,5 " <br> .meal 2,5 " | .fat 7,5 " <br> .meal 7,5 " |
| Temperature of incoming product in boiling vessel | low (e.g. 20°C) | high (e.g. 75°C) |

0051887

- 1 -

Claims:

1.      An installation for processing offal, comprising one or more evaporators each having vapour separators and condensate ducts, steam and vapour ducts, product ducts and product conveying pumps, said elements being arranged in such a manner that the incoming preprocessed rough product, to which in a certain ration clean fat has been added, is, during a given time, subjected to an increased temperature in order to withdraw water and to melt the fat,
characterized in
that the installation consists of a combination of one or several stages (II, III) of pipe evaporators (6, 14) with their concerning vapour separators (8, 16) and a continuous boiling vessel having its own vapour separator (24).

2.      An installation according to claim 1,
characterized in
that the pipe evaporators (6, 14) are connected in series and the continuous boiling vessel (22) for the final treatment of the product is in turn connected in series to the pipe evaporators, thus forming a multi-stage installation.

3.      An installation according to claim 1 or 2,
characterized in
that the boiling vessel (22) is provided with a connection (23) for a source of fresh steam, and in that the pipe evaporator (14) which in relation with the product path precedes the boiling vessel (22), is connected with the vapour emanating from the boiling vessel, the pipe evaporator (6) connected there-before always being heated by the vapour discharged from the subsequent pipe evaporator stage.

III  II  I

Fig. 1.

1/2

0051887

0051887

$H_2O - 5$ t.$-$/hr

10 t.$-$/hr
21

24

22

A

$H_2O$ 5 t.$-$/hr

5 t.$-$/hr

12,5 t.$-$/hr          45

$$FIG:2.$$

B

$H_2O-5$ t.$-$/hr

$H_2O$ 5t.$-$/hr

$H_2O-5$ t.$-$/hr

6

14

24

22

30 t.$-$/hr

III            II            I

37,5 t.$-$/hr          45          15 t.$-$/hr

$$FIG:3.$$

**European Patent**
**Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| A | CH - A - 262 258 (ESCHER WYSS) <br> * Page 1, lines 4,5; page 2, lines 3-6; figure * | 1 |
| | -- | |
| A | GB - A - 1 107 804 (ALFA-LAVAL) | |
| A | US - A - 2 510 233 (M.J. KERMER) | |
| AD | US - A - 3 506 407 (J.G. KEITH) | |
| AD | EP - A - 0 037 160 (STORK DUKE BV) | |
| | ----- | |

**CLASSIFICATION OF THE APPLICATION (Int. Cl. 3)**

C 11 B    1/00
B 01 D    1/26

**TECHNICAL FIELDS SEARCHED (Int.Cl. 3)**

B 01 D
B 01 B
A 23 J
C 11 B

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 10-02-1982 | VAN BELLEGHEM |

EPO Form 1503.1   06.78